**Europäisches Patentamt**

**European Patent Office**

**Office européen des brevets**

(19)

(11) Veröffentlichungsnummer: **0 289 866 B1**

(12)

# EUROPÄISCHE PATENTSCHRIFT

(45) Veröffentlichungstag der Patentschrift:
05.06.91 Patentblatt 91/23

(51) Int. Cl.⁵ : **A47B 88/00**

(21) Anmeldenummer: 88106302.8

(22) Anmeldetag: 20.04.88

(54) **Vorrichtung zur Befestigung einer Frontblende an metallischen Schubladenzargen.**

(30) Priorität: 04.05.87 AT 1103/87

(43) Veröffentlichungstag der Anmeldung:
09.11.88 Patentblatt 88/45

(45) Bekanntmachung des Hinweises auf die
Patenterteilung:
05.06.91 Patentblatt 91/23

(84) Benannte Vertragsstaaten:
DE FR GB IT SE

(56) Entgegenhaltungen:
EP-A- 0 124 059
EP-A- 0 160 733
DE-A- 3 620 450
DE-A- 3 713 254
FR-A- 2 352 978
FR-A- 2 506 143

(73) Patentinhaber: Julius Blum Gesellschaft
m.b.H.
Industriestrasse 1
A-6973 Höchst (AT)

(72) Erfinder: Röck, Erich
Küferstrasse 7
A-6973 Höchst (AT)
Erfinder: Brüstle, Klaus
Fellentorstrasse 23
A-6923 Lauterach (AT)

(74) Vertreter: Torggler, Paul, Dr. et al
Wilhelm-Greil-Strasse 16
A-6020 Innsbruck (AT)

EP 0 289 866 B1

## Beschreibung

Die Erfindung bezieht sich auf eine Vorrichtung zur Befestigung einer Frontblende an metallischen Schubladenzargen, die stirnseitig je eine Ausnehmung aufweisen, mit einem an der Frontblende befestigten vorzugsweise aus Kunststoffgefertigten, Block an jeder Seite einer Schublade, der mit einer Nut versehen ist, in die eine der Schubladenzargen einschiebbar ist, wobei neben der Ausnehmung in der Schubladenzarge ein Schlitz vorgesehen ist, in den ein von einer Seitenwand der Nut abstehender Vorsprung des Blockes eingreift und wobei ein Teil des Blockes in die Ausnehmung der Schubladenzarge ragt.

Eine derartige Vorrichtung ist beispielsweise aus der US-PS-3752553 bekannt.

Neben den Schubladen, die aus einem Stück gefertigt sind, insbesondere Kunststoffschubladen, sind immer noch und hauptsächlich Schubladen in Verwendung, die aus mehreren Teilen zusammengesetzt sind.

. Diese Schubladen sind meist mit Beschlägen versehen, die Teil der Ausziehführungsgarnitur sind, die das Herausziehen und das Hineinschieben der Schublade aus bzw. in den Möbelkorpus erleichtert.

Weiters weisen moderne Schubladen eine Halterung für die Frontblende auf, die es ermöglicht, die Position der Frontblende nach der Montage zu justieren, um bei in den Möbelkorpus eingesetzter Schublade deren Ausrichten in bezug auf die Fugen und auf die Seiten des Möbels zu korrigieren.

Des weiteren sind Schubladen bekannt, die metallische Schubladenzargen, d.h. Seitenwände aufweisen. Diese Schubladenzargen haben den Vorteil, daß an ihnen die schubladenseitigen Ausziehschienen der Ausziehführungsgarnitur unmittelbar ausgeformt werden können.

Aufgabe der Erfindung ist es, eine Vorrichtung zur Befestigung einer Frontblende zu schaffen, die neben einer einfachen und schnellen Verankerung der Frontblende an derartigen metallischen Schubladenzargen eine Höhenverstellung der Frontblende und gleichzeitig das Festlegen einer "O"-Stellung ermöglicht. Weiters soll die montierte Frontblende wieder von den Schubladenzargen abmontiert werden können.

Dies wird erfindungsgemäß dadurch erreicht, daß der Block, der vorzugsweise aus Kunststoff gefertigt ist, frei von der Frontblende absteht und daß eine parallel zur Frontblende ausgerichtete Schraube im Bereich des Vorsprunges durch den Block und den Schlitz ragt und die beiden durch die Nut getrennten Abschnitte des Blockes verbindet und daß sich in der Nut eine Verstellplatte befindet, die in Montagelage in die Ausnehmung der Schubladenzarge ragt und oben und unten am Rand der Ausnehmung anliegt.

Vorteilhaft ist vorgesehen, daß die Verstellplatte mit einer Verzahnung versehen ist, die in eine korrespondierende Verzahnung im Block eingreift.

Die Verstellplatte, die mit ihren Rändern oben und unten an den Rändern der Ausnehmung anliegt, ist durch die Verzahnung in bezug auf den Block gehalten. Auf diese Art und Weise ist eine automatische "O"-Stellung für die Frontblende gegeben. Erweist sich eine Korrektur der Lage der Frontblende nach oben oder nach unten als notwendig, kann diese mit den Blöcken an jeder Seite dennoch in bezug auf die Verstellplatte verschoben werden, da die Rasterung der Verzahnung überwindbar ist. Dies kann noch dadurch erleichtert werden, wenn der Block aus Kunststoff gefertigt ist. Befindet sich die Frontblende in der richtigen Position, wird die Klemmschraube angezogen, und die Frontblende ist endgültig positioniert.

Ein anderes Ausführungsbeispiel der Erfindung, bei dem sowohl eine Verstellung der Frontblende, als auch die Festlegung der Frontblende in der "O"-Stellung möglich ist, sieht vor, daß die Verstellplatte und der Block durch einen Exzenter verbunden werden. Vor der Montage kann der Exzenter in eine "O"-Stellung gebracht werden und der Block ist wiederum über die Verstellplatte in bezug auf die Schubladenzarge in einer bestimmten Höhe gehalten. Eine Korrektur nach oben oder nach unten kann durch Verdrehen des Exzenters erzielt werden.

Vorteilhaft ist vorgesehen, daß der Block an den Schlitz anschließend mindestens eine Ausnehmung aufweist, in der die Verstellplatte geführt ist.

Nachfolgend werden zwei Ausführungsbeispiele der Erfindung anhand der Figuren der beiliegenden Zeichnungen beschrieben.

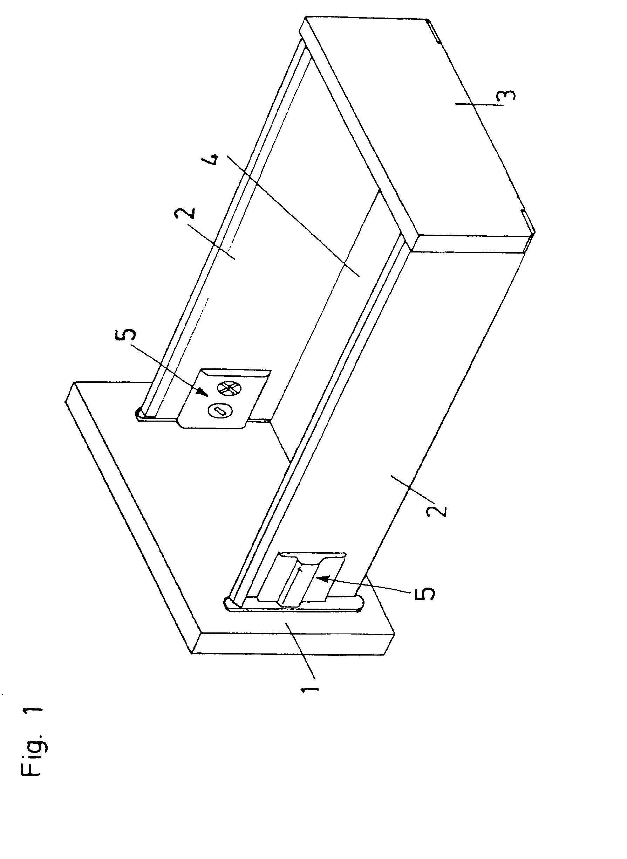

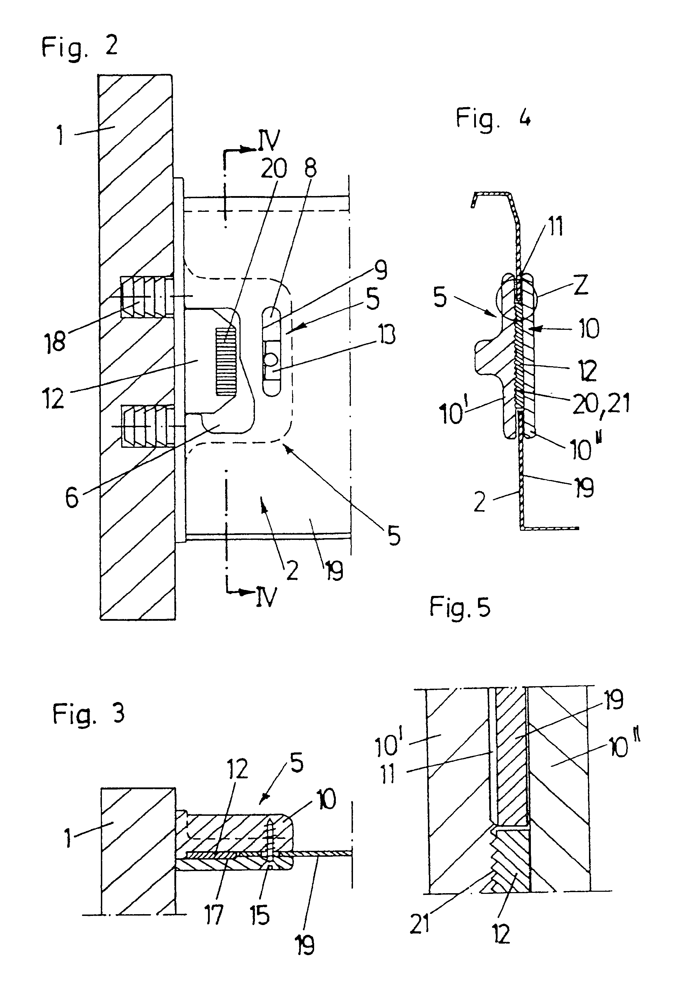

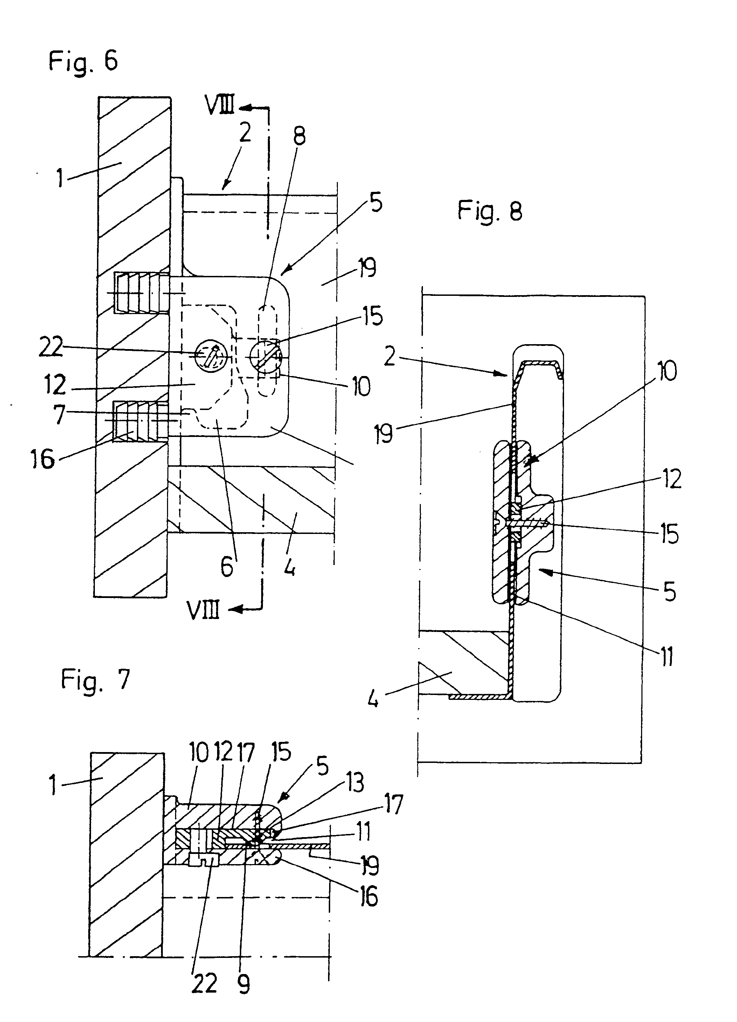

Die Fig. 1 zeigt ein schematisch gehaltenes Schaubild einer Schublade mit zwei erfindungsgemäßen Vorrichtungen, die Fig. 2 zeigt eine Seitenansicht des vorderen Endes der Schubladenzarge, die Fig. 3 zeigt eine Draufsicht auf das vordere Ende einer Schubladenzarge mit montierter Frontblende, die Fig. 4 zeigt einen Schnitt nach der Linie IV-IV der Fig. 2, die Fig. 5 zeigt das Detail Z der Fig. 4, die Fig. 6 zeigt eine Seitenansicht des vorderen Endes der Schubladenzarge mit montierter Frontblende bei einem weiteren Ausführungsbeispiel der Erfindung, die Fig. 7 zeigt eine Draufsicht auf diese Schubladenzarge mit Frontblende, und die Fig. 8 zeigt einen Schnitt nach der Linie VIII-VIII der Fig. 6.

In den Figuren der Zeichnungen ist die Fronblende mit 1, jede Schubladenzarge mit 2, die Schubladenrückenwand mit 3 und der Schubladenboden mit 4 bezeichnet.

Die Frontblende 1 ist an den Schubladenzargen 2 mittels der erfindungsgemäßen Vorrichtungen 5 befestigt.

Wie insbesondere aus den Figuren 2 und 6 ersichtlich, weist jede Schubladenzarge 2 vorne eine Ausnehmung 6 auf. Im Bereich der Ausnehmung 6 kann die Schubladenzarge 2 mit einer nach oben vorspringenden Nase 7 versehen sein.

Hinter der Ausnehmung 6 ist ein vertikaler Schlitz 8 angeordnet. Die Kante 9 des Schlitzes 8 ist vorteilhaft abgeschrägt ausgeführt.

Die erfindungsgemäße Vorrichtung 5, die beispielsweise aus Kunststoff gespritzt ist, besteht aus einem Block 10, der mit einer Nut 11 versehen ist.

In der Nut 11 befindet sich die Verstellplatte 12.

An einer Seitenwand der Nut 11 ist am Block 10 ein trapezförmiger Vorsprung 13 ausgebildet. Der Block 10 ist im Bereich des Vorsprunges 13 mit einer den Block 10 quer durchlaufenden Öffnung versehen, die zur Aufnahme einer Klemmschraube 15 bestimmt ist.

Die Öffnung weist an einer Seite des Blockes 10 eine Erweiterung 16 auf, die den Kopf der Klemmschraube 15 zur Gänze aufnehmen kann.

Die Vorrichtung 5 ist mit Dübeln 18 versehen, mittels denen sie an der Frontblende 1 gehalten ist.

Zur Montage der Frontblende 1 befinden sich die Vorrichtungen 5 an der Frontblende 1.

Es genügt nun, die Frontblende 1 mit den Vorrichtungen 5 auf die Schubladenzargen 2 aufzuschieben, und zwar derart, daß die Verstellplatte 12 des Blockes 10 in der Höhe satt in der Ausnehmung 6 aufgenommen wird und die beiden von der Nut 11 getrennten Bereiche 10',10" des Blockes 10 den Vertikalsteg 19 der Schubladenzarge 2 beidseitig umfassen.

Die Verstellplatte 12 ist dabei in einer Ausnehmung 17 des Blockes 10 geführt.

Beim Aufschieben des Blockes 10 auf die Schubladenzarge 2 schnappt der Vorsprung 13 im Schlitz 8 ein, und die Frontblende 1 ist bereits an den Schubladenzargen 2 gehalten.

Die Höhenpositionierung der Frontblende 1, d.h. der "O"-Stellung, ist in den gezeigten Ausführungsbeispielen auf verschiedenen Arten gegeben.

Im Ausführungsbeispiel nach den Figuren 2 bis 5 ist die Verstellplatte 12 mit einer Verzahnung 20 versehen, die in eine korrespondierende Verzahnung 21 am Block 10 eingreift. Dieses Ineinandergreifen der beiden Verzahnungen 20, 21 genügt, eine Verschiebung des Blockes 10 in bezug auf die Verstellplatte 12 allein durch das Gewicht der Frontblende 1 zu verhindern. Ist eine Verstellung der Frontblende 1 nach oben oder unten jedoch notwendig, kann diese mit der Hand verschoben werden, wobei die Kupplung durch die beiden Verzahnungen 20, 21 überwunden wird.

Im Ausführungsbeispiel nach den Figuren 6 bis 8 sind der Block 10 und die Verstellplatte 12 durch einen Exzenter 22 miteinander verbunden. Der Exzenter 22 kann einerseits die "O"-Stellung der Frontblende 1 vorgeben, als auch die Höhenverstellung der Frontblende 1 bewirken.

Zur endgültigen Fixierung der Frontblende 1 werden an beiden Seiten die Klemmschrauben 15 in die Blöcke 10 eingeschraubt. Dadurch können auch starke Kräfte an der Frontblende 1 angreifen, ohne daß diese unbeabsichtigt von den Schubladenzargen 2 gerissen wird.

## Ansprüche

1. Vorrichtung zur Befestigung einer Frontblende (1) an metallischen Schubladenzargen (2), die stirnseitig je eine Ausnehmung (6) aufweisen, mit einem an der Frontblende (1) befestigten vorzugsweise aus Kunststoff gefertigten, Block (10) an jeder Seite einer Schublade, der mit einer Nut (11) versehen ist, in die eine der Schubladenzargen (2) einschiebbar ist, wobei neben der Ausnehmung (6) in der Schubladenzarge (2) ein Schlitz (8) vorgesehen ist, in den ein von einer Seitenwand der Nut (11) abstehender Vorsprung (13) des Blockes (10) eingreift und wobei ein Teil des Blockes (10) in die Ausnehmung (6) der Schubladenzarge (2) ragt, dadurch gekennzeichnet, daß der Block (10) frei von der Frontblende (1) absteht und daß eine parallel zur Frontblende (1) ausgerichtete Schraube (15) im Bereich des Vorsprunges (13) durch den Block (10) und den Schlitz (8) ragt und die beiden durch die Nut (11) getrennten Abschnitte (10', 10") des Blockes (10) verbindet und daß sich in der Nut (11) eine Verstellplatte (12) befindet, die in Montagelage in die Ausnehmung (6) der Schubladenzarge (2) ragt und oben und unten am Rand der Ausnehmung anliegt.

2. Vorrichtung nach Anspruch 1, dadurch gekennzeichnet, daß der Vorsprung (13) in einem Horizontalschnitt trapezförmig und eine Kante (9) des Schlitzes (8) abgeschrägt ausgeführt ist.

3. Vorrichtung nach Anspruch 1, gekennzeichnet durch einen die Verstellplatte (12) und den Block (10) verbindenden Exzenter.

4. Vorrichtung nach Anspruch 1, dadurch gekennzeichnet, daß der Block (10) eine die Nut (11) seitlich anschließende Ausnehmung (17) aufweist, in der die Verstellplatte (12) geführt ist.

## Claims

1. Apparatus for attaching a front panel (1) to metal drawer frames (2), which on the end face each comprise a recess (6), with a block (10) preferably made from synthetic material, attached to the front panel (1), on each side of a drawer, which is provided with a groove (11), into which one of the drawer frames (2) can be inserted, close to the recess (6) in the drawer frame (2), a slot (8) being provided, in which a projection (13) of the block (10) projecting from one side wall of the groove (11) engages and a part of the block (10) projecting into the recess (6) of the drawer frame (2), characterised in that the block (10) projects freely from the front panel (1) and that in the region of the projection (13), a screw (15) aligned parallel with the front panel (1) projects through the block (10) and the slot (8) and connects the two sections (10', 10") of the block (10) separated by the groove (11) and that located in the groove (11) is an adjusting plate (12), which in the assembled position projects into the recess (6) of the drawer frame (2) and at the top and bottom bears against the edge of the recess.

2. Apparatus according to Claim 1, characterised in that in a horizontal section, the projection (13) is constructed to be trapezoidal and one edge (9) of the slot (8) is constructed in a bevelled manner.

3. Apparatus according to Claim 1, characterised by an eccentric connecting the adjusting plate (12) and the block (10).

4. Apparatus according to Claim 1, characterised in that the block (10) comprises a recess (17) adjoining the groove (11) laterally, in which recess the adjusting plate (12) is guided.

## Revendications

1. Dispositif de fixation d'une plaque frontale (1) sur un cadre de tiroir (2) métallique qui présente un évidement (6) à l'avant de chacune de ses parois, comprenant sur chaque côté du tiroir, un bloc (10) fabriqué de préférence en matière plastique, fixé sur la plaque frontale (1) et muni d'une encoche (11) dans laquelle l'une des parois du cadre de tiroir (2) peut être introduite, une fente (8) dans laquelle s'engage une saillie (13) du bloc (10) dépassant d'une paroi latérale de l'encoche (11), étant prévue en plus de l'évidement (6) dans le cadre de tiroir (2) et une partie du bloc (10) faisant saillie dans l'évidement (6) du cadre de tiroir (2), caractérisé en ce que le bloc (10) fait saillie librement de la plaque frontale (1) et en ce qu'une vis (15) orientée parallèlement à la plaque frontale (1) fait saillie dans la zone de la saillie (13), dans le bloc (10) et la fente (8) et relie les deux parties (10', 10") du bloc (10) séparées par l'encoche (11) et en ce qu'une plaque de réglage (12) se trouve dans l'encoche (11), ladite plaque faisant saillie en position de montage dans l'évidement (6) du cadre de tiroir (2) et prenant appui en haut et en bas sur le bord de l'évidement.

2. Dispositif selon la revendication 1, caractérisé en ce que la saillie (13) est trapézoïdale en coupe horizontale et qu'une arête (9) de la fente (8) est réalisée biseautée.

3. Dispositif selon la revendication 1, caractérisé par un excentrique reliant la plaque de réglage (12) et le bloc (10).

4. Dispositif selon la revendication 1, caractérisé en ce que le bloc (10) présente un évidement (17) qui se raccorde latéralement à l'encoche (11) et dans lequel est guidée la plaque de réglage (12).

Fig. 1

EP 0 289 866 B1

Fig. 2

Fig. 4

Fig. 3

Fig. 5

6

Fig. 6

Fig. 8

Fig. 7

7